# EUROPEAN PATENT APPLICATION

(11) **EP 1 071 264 A1**
(43) Date of publication of application: **24.01.2001**
(21) Application number: 00115470.7
(22) Date of filing: 18.07.2000
(51) Int. Cl.: H04M 1/65

(54) **Answer phone and answering method thereof**

(30) Priority: 23.07.1999 JP 20980499
(71) Applicant: MATSUSHITA ELECTRIC INDUSTRIAL CO., LTD., Kadoma-shi, Osaka (JP)
(72) Inventor: Hashimoto, Takafumi, Yokosuka-shi, Kanagawa 239-0841 (JP)
(74) Representative: Grünecker, Kinkeldey, Stockmair & Schwanhäusser Anwaltssozietät

(57) **Abstract**

In a telephone having an answering function, a response message corresponding to a telephone number of a specified party is recorded in a memory (7) capable of electrically erasing the recorded contents, an answering function (1a) is activated to reproduce the response message when a caller's telephone number notified through a network at the incoming call is the telephone number of the specified party, the response message is erased from the memory (7) after the reproduction is completed, and the memory (7) is recycled as a recording region for a received message. A storage region can be utilized effectively.

## Description

### BACKGROUND OF THE INVENTION

The present invention relates to a telephone having an answering function for returning a response message prepared for a specified caller when there is an incoming call from the caller, and an answering method for the telephone, and more particularly to the effective utilization of a memory for recording the response message.

When there is an incoming call, a conventional telephone having an answering function can return a fixed response message which has been recorded in advance and can record a message of an caller. Japanese Patent Publication No. Hei. 5-130209 discloses a telephone having an answering function for returning a response message prepared for a specified caller according to incoming call from the caller if the caller's telephone number of the caller can be identified by a caller's telephone number notification service or the like.

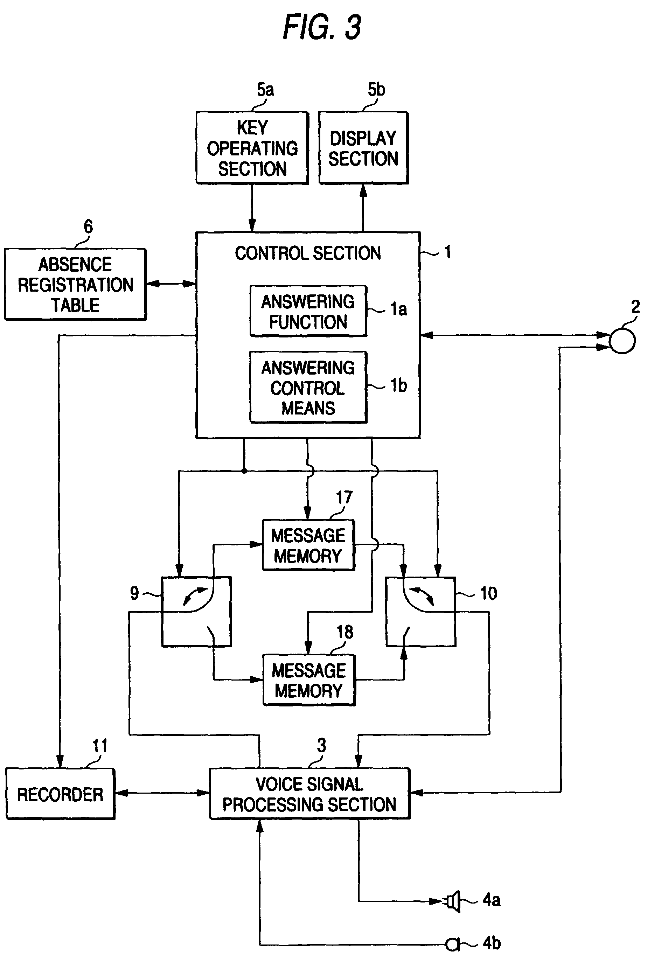

As shown in Fig. 3, the telephone comprises a control section 1 for generally controlling the telephone, a voice signal processing section 3 for processing a voice signal received from a telephone line 2 and a voice signal to be sent to the telephone line 2, a receiver 4a for reproducing a voice, a microphone 4b for inputting the voice, a key operating section 5a with which a user inputs an instruction to the control section 1, a display section 5b constituted by a liquid crystal display (LCD), an absence registration table 6 for registering information about whether an answering function is activated and information about the kind of a response message sent corresponding to a caller's telephone number, a plurality of message memories 17 and 18 for registering the response message, switches 9 and 10 for selecting the message memories 17 and 18, and a recorder 11 for recording a received message. The control section 1 has a answering function 1a and answering control means 1b for controlling correspondence by the answering function at the incoming call.

Each of the message memories 17 and 18 of the telephone can register one response message by means of the microphone 4b.

Moreover, the absence registration table 6 stores absence information about the selection of the activation of the answering function 1a corresponding to an caller's telephone number, and a message number indicative of the kind of a response message to be sent by the answering function 1a.

The answering control means 1b of the control section 1 retrieves an caller's telephone number from the absence registration table 6 when it is notified of the caller's telephone number from the telephone line 2 at the incoming call, decides whether the answering function 1a is to be activated according to the registered absence information, controls the switches 9 and 10 to select the message memory 17 or the message memory 18 based on a message number corresponding to the caller's telephone number if the answering function 1a is to be activated, and reads a response message registered therein. The read response message is processed by the voice signal processing section 3 and is then sent to the telephone line 2.

The message received from a caller through the telephone line 2 is processed by the voice signal processing section 3 and is then stored in a message memory of the recorder 11.

In the conventional telephone, however, a message memory for storing a response message for a specified caller and a message memory for recording a message of the caller are prepared separately. Therefore, there is a problem in that a large capacity memory is required. In an apparatus which is to be intended for a reduction in size and weight, for example, a portable telephone, particularly, it is hard to include the large capacity memory.

### SUMMARY OF THE INVENTION

In order to solve the conventional problem, it is an object of the invention to provide a telephone in which an answering function for responding to a specified caller by a special response message is implemented by the effective utilization of a limited storage capacity, and an answering method for the telephone.

A telephone according to the invention records a response message corresponding to a telephone number of a specified party in a memory capable of electrically erasing the recorded contents, activates an answering function to reproduce the response message when a caller's telephone number notified through a network at an incoming call is the telephone number of the party, erases the response message from the memory after the reproduction is completed, and recycles the memory as a recording region for a received message.

Consequently, an answering response to a specified caller by a special response message can be carried out by the effective utilization of a limited storage capacity.

A first aspect of the invention is directed to a telephone having an answering function, comprising a memory capable of electrically erasing recorded contents which serves to record a response message corresponding to a telephone number of a specified party, and a control section for activating the answering function to reproduce the response message when a caller's telephone number notified through a network during incoming call is the telephone number of the party, erasing the response message from the memory after the reproduction is completed, and using the memory as a recording region for a received message. The answering response to the specified caller by the special response message can be carried out by the effective utilization of a limited storage capacity.

A second aspect of the invention is directed to an answering method for a telephone having an answering function, comprising the steps of recording a response message corresponding to a telephone number of a specified part in a memory capable of electrically erasing the recorded contents, activating the answering function to reproduce the response message when a caller's telephone number notified through a network during incoming call is the telephone number of the specified party, erasing the response message from the memory after the reproduction is completed, and recycling the memory as a recording region for a received message. Thus, a small storage region can be utilized effectively.

### BRIEF DESCRIPTION OF THE DRAWINGS

Fig. 1 is a block diagram showing the structure of a telephone according to an embodiment of the invention;
Fig. 2 is a flowchart showing the processing procedure for the telephone according to the embodiment of the invention; and
Figure 3 is a functional block diagram showing the structure of a conventional telephone.

### DETAILED DESCTIPTION OF PREFERRED EMBODIMENT

An embodiment of the invention will be described below with reference to the drawings.

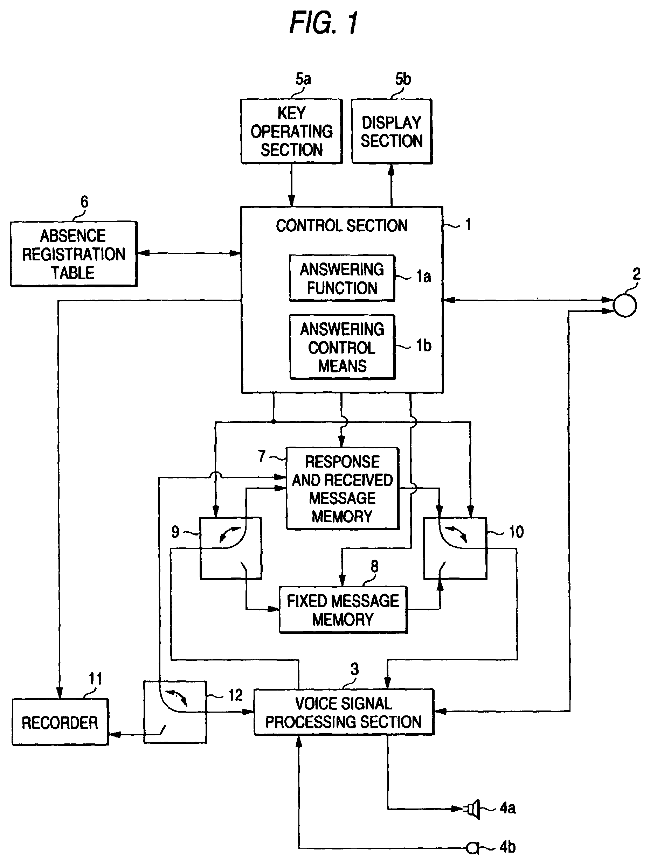

As shown in Fig. 1, a telephone according to an embodiment of the invention comprises a control section 1 for generally controlling the telephone, a voice signal processing section 3 for processing a voice signal received from a telephone line 2 and a voice signal to be sent to the telephone line 2, a receiver 4a for reproducing a voice, a microphone 4b for inputting the voice, a key operating section 5a with which a user inputs an instruction to the control section 1, a display section 5b for causing the control section 1 to display various information for a user, an absence registration table 6 for registering absence information about the selection of the activation of the answering function corresponding to a caller's telephone number and the kind of a response message to be sent by the answering function, a response and received message memory 7 for storing a response message to be sent during an answering response, a fixed message memory 8 for storing a fixed response message prepared for the telephone, switches 9 and 10 for alternatively selecting the response and received message memory 7 and the fixed message memory 8, a recorder 11 including a message memory for recording a voice received during an answering response and the like, and a switch 12 for alternatively selecting the recorder 11 and the response and received message memory 7. Moreover, the control section 1 has a answering function 1a and answering control means 1b for controlling correspondence by the answering function at the incoming call.

The voice signal processing section 3 includes a codec and the like and reproduces a voice signal from received voice data given from the telephone line 2, gives the voice signal to the receiver 4a, changes the voice signal output from the microphone 4b into voice data and outputs the voice data through the telephone line 2.

The key operating section 5a, the display section 5b and the absence registration table 6 are connected to the control section 1. The display section 5b is constituted by a liquid crystal display (LCD), for example. The absence registration table 6 is a RAM, for example, and registers absence information about whether the answering function is to be activated and information indicative of the kind of a message to be sent corresponding to an caller's telephone number.

The response and received message memory 7 can electrically erase the recorded contents, and is selectively connected to the voice signal processing section 3 by the switches 9 and 10 and serves to store voice data given from the voice signal processing section 3 and to output the stored voice data to the voice signal processing section 3 under the control of the control section 1. Moreover the response and received message memory 7 erases the contents of a response message when the reproduction of the response message is completed, and is switched, by the switch 12, into a received message memory for recording the voice of a caller.

Similarly, the fixed message memory 8 is selectively connected to the voice signal processing section 3 by the switches 9 and 10, and outputs the stored voice data to the voice signal processing section 3 under the control of the control section 1.

The control section 1 includes a microcomputer as a main control circuit, for example, and has the answering function 1a and the answering control means 1b. The answering control means 1b refers to the absence registration table 6 based on a caller's telephone number notified through the telephone line 2 by a caller number notification service or the like during incoming call, decides whether the answering function 1a is to be activated and determines the kind of a response message to be sent.

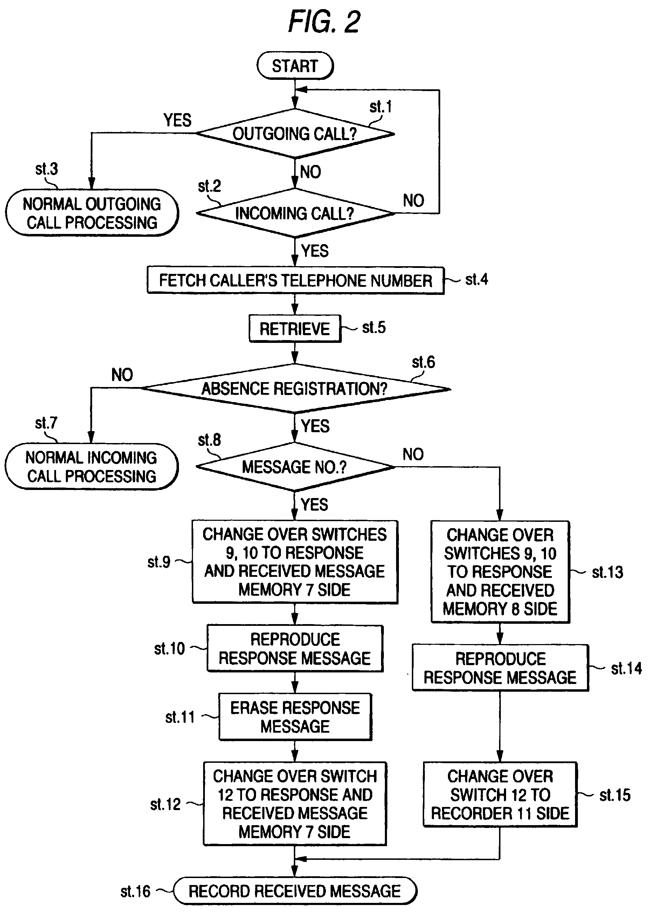

The operation of the telephone will be described below with reference to a flowchart shown in Fig. 2.
Step 1: The control section 1 monitors the outgoing call in a standby state, and
Step 2: monitors the generation of incoming call.
   When a predetermined outgoing call operation such as on-hook or the like is carried out,
Step 3: the control section 1 executes outgoing call processing by the general procedure.
   When the incoming call is generated in the standby state and is notified through the telephone line 2,
Step 4: the control section 1 fetches a caller's telephone number notified through the telephone number 2,
Step 5 : retrieves the fetched caller's telephone number from the absence registration table 6 and reads corresponding absence registration information and a message number, and
Step 6 : decides whether the absence registration has been performed for the present caller's telephone number based on the read absence registration information. If "absence" is not set,
Step 7 : the control section 1 executes a normal incoming call processing. In the normal incoming call processing, for example, a calling sound is produced to wait for on-hook and a response is given after the on-hook.
   In the case in which the "absence" is set at the Step 6,
Step 8 : if the information read at the Step 5 includes a message number corresponding to the caller's telephone number, that is, the incoming call sent from a specified person,
Step 9 : the control section 1 changes over the switches 9 and 10 to the response and received message memory 7 side, and
Step 10 : the control section 1 executes the answering response processing by the answering function 1a. For example, after a link is set, a voice message stored in the response and received message memory 7 is given to the voice signal processing section 3 and is then sent through the telephone line 2.
Step 11 : The control section 1 executes a processing of erasing the contents of the response and received message memory 7, and
Step 12 : changes over the switch 12 to the response and received message memory 7 side.
   If the caller's telephone number does not include the corresponding message number at the Step 8, that is, the incoming call is given from a person other than the specified person,
Step 13 : the switches 9 and 10 are changed over to the fixed message memory 8 side, and
Step 14 : the answering response processing is executed by the answering function 1a.
Step 15 : Then, the switch 12 is changed over to the recorder 11 side, and
Step 16 : a voice arriving for a subsequent predetermined period from a caller is recorded in the response and received message memory 7 or the recorder 11.

With such a structure, a special message can be given to only the specified caller during the answering response, and the limited storage capacity of a portable telephone, for example, can be used effectively.

While the telephone utilizing the caller number notification service has been described above, the invention can be applied to any telephone connected to a network having the function of notifying a terminal on the incoming call side of a caller's telephone number.

As described above, in the telephone and answering method thereof according to the invention, a storage capacity used for recording a response message is recycled for a received message after a response message is reproduced. Therefore, an answering response to give a special message to a specified caller can be carried out without other callers hearing the response by effectively utilizing the limited storage capacity of a storage medium provided in the telephone.

## Claims

1. A telephone having an answering function, comprising:
a memory capable of electrically erasing recorded contents, which serves to record a response message corresponding to a telephone number of a specified party; and
a control section for activating the answering function to reproduce the response message when a caller's telephone number notified through a network at an incoming call is the telephone number of the party, erasing the response message from the memory after the reproduction is completed, and using the memory as a recording region for a received message.

2. An answering method for a telephone having an answering function, which comprises steps of:
recording a response message corresponding to a telephone number of a specified part in a memory capable of electrically erasing the recorded contents;
activating the answering function to reproduce the response message when a caller's telephone number notified through a network at an incoming call is the telephone number of the specified party;
erasing the response message from the memory after the reproduction is completed; and
recycling the memory as a recording region for a received message.
